# EUROPEAN PATENT APPLICATION

(11) **EP 1 041 132 A2**
(43) Date of publication of application: **04.10.2000**
(21) Application number: 00106874.1
(22) Date of filing: 30.03.2000
(51) Int. Cl.: C09K 11/06, H05B 33/14

(54) **Luminescent organic material for light-emitting devices**

(30) Priority: 01.04.1999 IT BA990010
(71) Applicant: Istituto Nazionale Per La Fisica Della Materia, 16152 Genova (IT)
(72) Inventor: Barbarelia, Giovanna, Via Gobetti, 101 40129 Bologna (IT); Favaretto, Laura, Via Gobetti, 101 40129 Bologna (IT); Zambianchi, Massimo, Via Gobetti, 101 40129 Bologna (IT); Cingolani, Roberto, Via Arnesano 73100 Lecce (IT); Gigli, Giuseppe, Via Arnesano 73100 Lecce (IT)
(74) Representative: Eccetto, Mauro

(57) **Abstract**

A luminescent organic material for light-emitting devices, in particular, for organic LEDs, having at least one thienyl-S,S-dioxide unit obtained by functionalizing the sulfur of a thiophene ring. Inserting a thiophene ring functionalized with oxygen atoms in oligothiophenes of appropriate length and symmetry provides for maintaining or increasing intrinsic quantum efficiency and for modulating the wavelength of the emitted light.

## Description

The present invention relates to a luminescent organic material for light-emitting devices, in particular, organic LEDs.

The luminescent organic materials, such as PPV and Alq3, currently used for making thin films in light-emitting devices, such as light-emitting diodes or LEDs, have numerous drawbacks.

These are normally solved by encapsulating the materials and inserting metal contacts embedded in the films.

Moreover, the quantum efficiency and emission wavelength tunability of known materials are poor.

Research is therefore being conducted into materials enabling organic LEDs to be made entirely of plastic material.

It is therefore an object of the present invention to provide light-emitting devices, in particular, LEDs, designed to eliminate the aforementioned drawbacks, and which, in particular, make encapsulation and the insertion of metal contacts superfluous, enable LEDs to be made of organic material and using the same class of material for all the emission wavelengths in the visible spectrum, are more reliable, and are easier to produce.

According to the present invention, there is provided a luminescent material for light-emitting devices, comprising at least one thienyl-S,S-dioxide unit.

The present invention is described in detail below, with reference also to the accompanying drawing showing a view in perspective of an organic LED in accordance with the present invention.

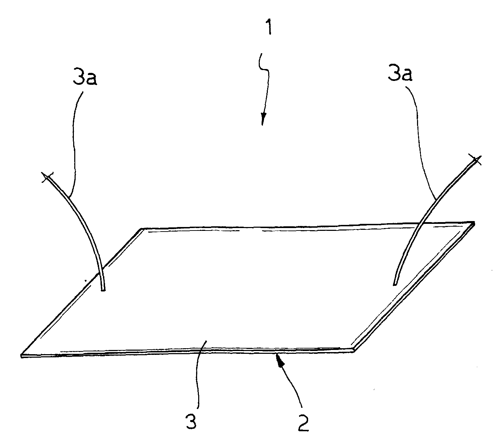

Number 1 in Figure 1 indicates as a whole an organic LED comprising a support 2, for instance a plastic foil, a film 3 on a side of the support 2 and respective power supplying elements; the film 3 is made of a material containing at least one thienyl-S,S-dioxide unit and directly incorporates the elements 3, without the necessity of contacting and welding; if the film 3 is self-supporting, the support 2 may be avoided.

It is well known that tiophene based materials may be selectively oxidised at the thienyl sulfurs to the corresponding thiophene-S,S-dioxides by reactions already described in the literature and therefore not reported in details.

Thiophene-based molecules can be properly engineered by controlling the length of the chain and by inserting some functional groups, in order to tune the HOMO-LUMO gap from the blue to the red, resulting in the unprecedentedly wide tunability of the emitted light.

It has been surprisingly found that thienyl-S,S-dioxide based materials have an high quantum efficiency and also the following properties: wide spectral tunability, no degradation in time (thus avoiding the requirement of encapsulation), completely plastic device (no metal contacts) suitable for technologies over plastic substrates.

Thienyl-S,S-dioxide materials may therefore be used in thin films useful in organic light emitters.

Thienyl-S,S-dioxide materials show the highest photoluminesce efficiency ever measured for thiophene based materials in the solid state. The obtained values (mainly > 37%) are even higher than that of the organic luminescent materials which are currently under investigation for application in organic electroluminescent devices.

Main features of the thienyl-S,S-dioxide materials according to the present invention are the functionalization of the thienyl sulfur with oxygen atoms (in order to modify the HOMO and LUMO energies and to facilitate charge injection), which is carried out such as the material comprises at least one thiophene ring in the α position of the ring of said thienyl-S,S-dioxide and grafting some alkyl substituents in the β position of the ring of said thienyl-S,S-dioxide to prevent the formation of planar or partly planar structures (in order to avoid π,π stacking), leading to unprecedently efficient photoluminescence.

The insertion of one non-aromatic thienyl-S,S-dioxide unit within the skeleton of an oligothiophene does not modify the π,π* character of the frontier orbitals but decreases their energy and that of the LUMO more than that of the HOMO.

The oligomers containing a thienyl-S,S-dioxide moiety are characterized by much greater electron affinities and slightly higher oxidation potentials than their 'fully aromatic' counterparts. This results in a substantial enhancement of the electron injection capability of the compound, With strong impact on the electrical performance of the device.

Furthermore, the oxygen atoms modify the self organization properties of the molecules in the solid state. Indeed, the molecular packing of these new molecules is characterized by the presence of a number of extremely short van der Waals separations, all involving the oxygen atoms. The peculiar molecular packing causes a strong enhancement of the quantum efficiency of the thiophene solid films.

In conclusion, thienyl-S,S-dioxide based materials allow to achieve all the modifications needed to optimize the electronic properties and the solid state morphology of thiophenes required for LED applications.

The advantages of the luminescent material according to the present invention will be clear from the foregoing description.

In this way one can envisage the application of a new generation of solid state thiophene films for high-efficiency, colour-tunable LEDs operating with reduced currents and without relevant problems of chemical stability.
In particular, the luminescent material used in the organic LED according to the present invention provides for wide tunability of the energy emitted, from blue to infrared, and high quantum efficiency.

Moreover, functionalizing the sulfur in the thiophene ring with oxygen atoms provides for increasing the electron affinity of the molecule to ensure improved electron injection; increasing ionization potential to make the molecule more stable with respect to water and oxygen; modulating HOMO and LUMO energies and the HOMO-LUMO energy gap by appropriately alternating modified and non modified thiopehene rings.

Moreover, inserting a thiophene ring functionalized with oxygen atoms in oligothiophenes of appropriate length and symmetry provides for maintaining or increasing intrinsic quantum efficiency and for modulating the wavelength of the emitted light.

Finally, functionalizing modified oligothiophenes by insertion of appropriate alkyl substituents prevents π-π stacking and the formation of planar or partly planar structures in the oligothiophene films.

The invention will now be described with reference to examples, however, it should be observed that several modifications obvious for the specialist are possible within the framework of the idea of the invention.

### Example 1

### Comparative table

In table 1 the properties are compared of known luminescent materials for LEDs and of the new materials according to the present invention.

**TABLE 1**

| | *Quantum Efficiency* | *Electrical Conductivity* | *Degradation* | *Processing* | *Tunability* |
|---|---|---|---|---|---|
| Thiophenes | Low | Good | No | Easy | Yes |
| PPV | High | Low | Yes | Encapsulation + contacts | Weak |
| Al(q3) | High | Low | Weak | Encapsulation + contacts | No |

### Example 2

In table 2 are reported molecular structure, fluorescence frequencies and efficiency of selected oligothiophene-S,S-dioxides which have been obtained according to the present invention, operating in conventional manner the necessary chemical reactions, which are accordingly not reported.

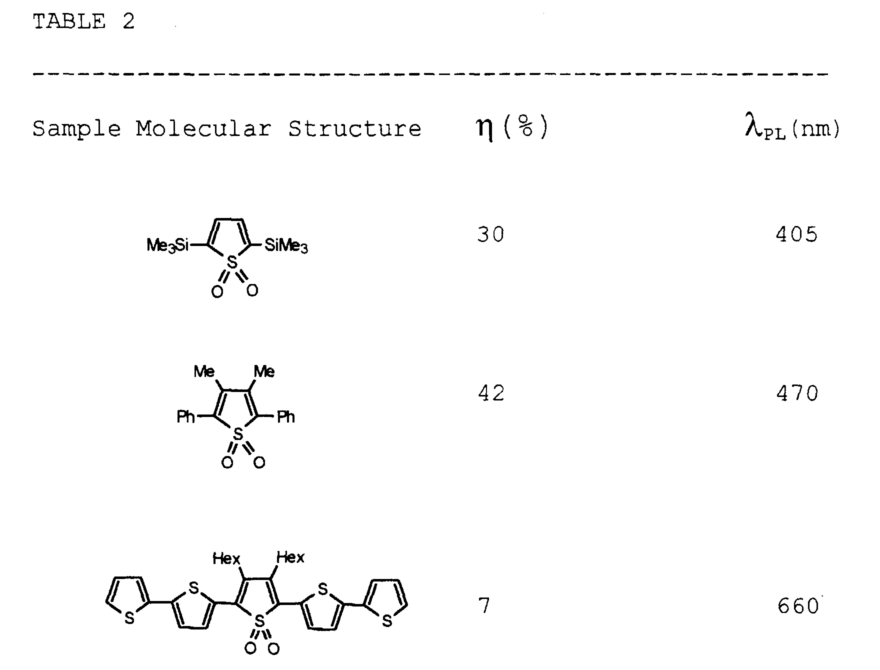

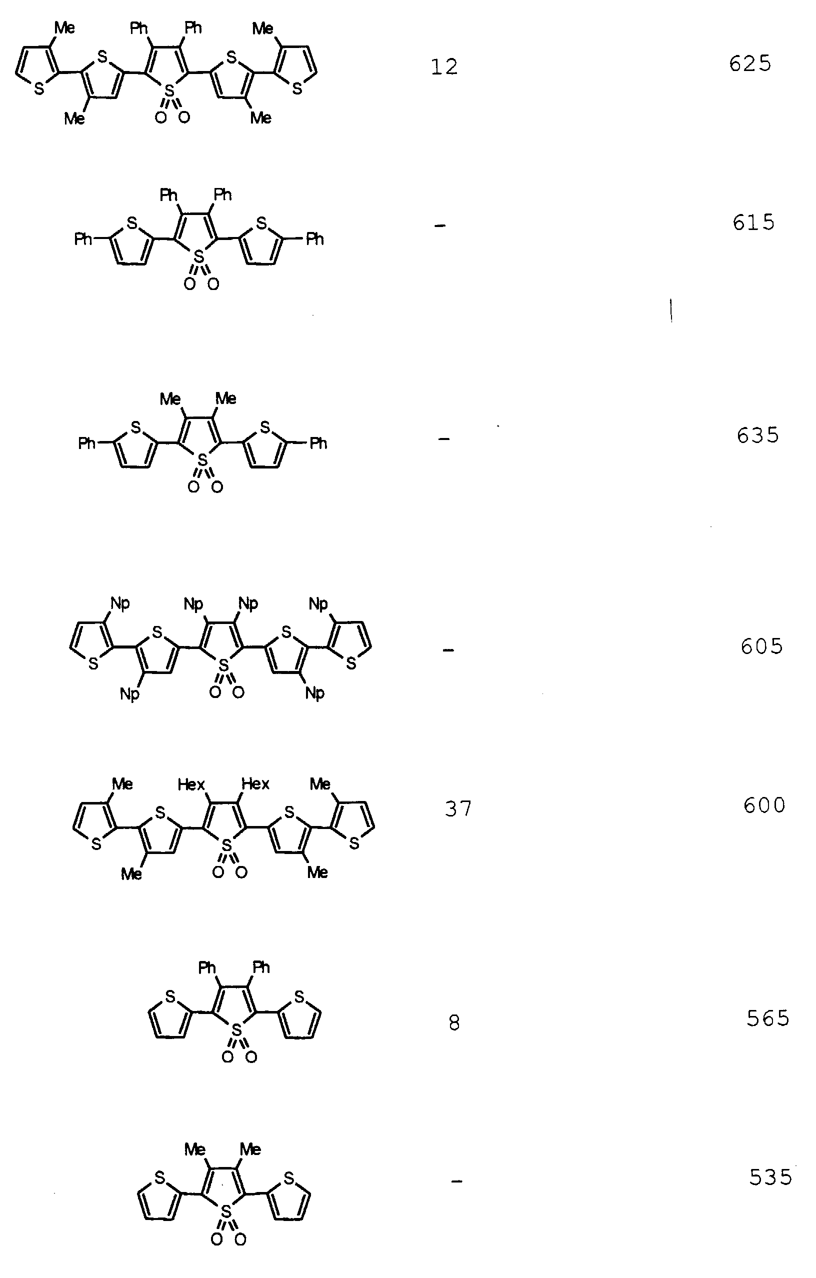

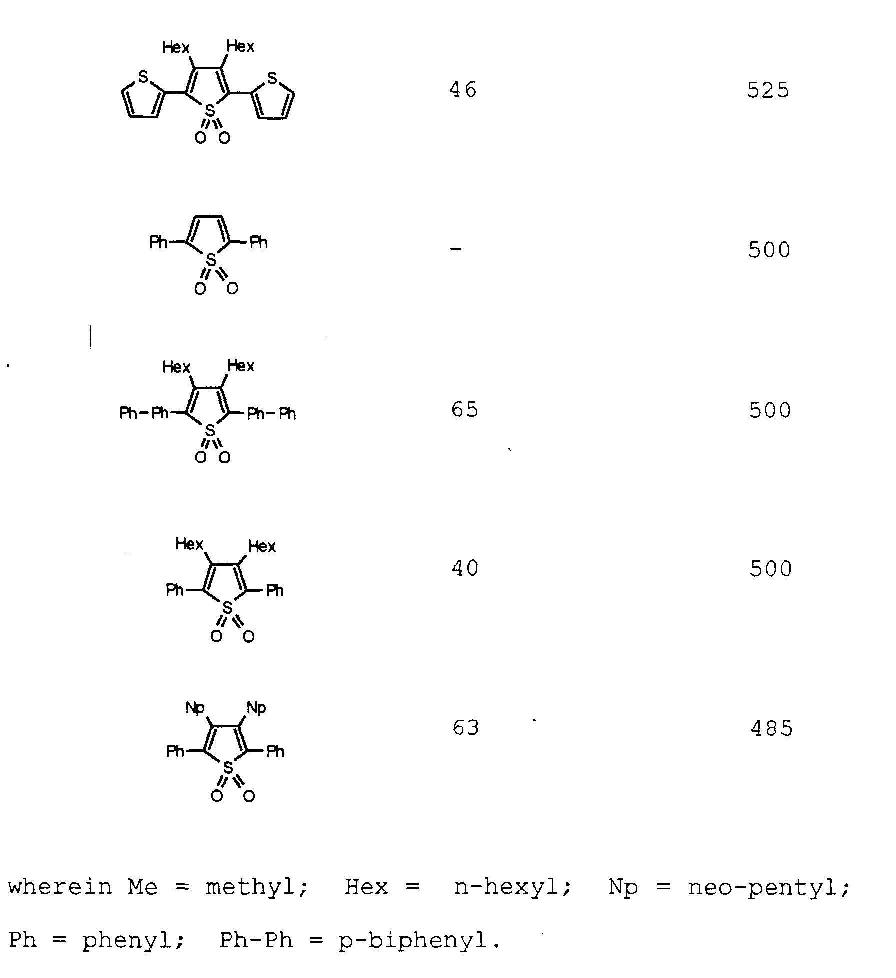

## Claims

1. A luminescent organic material for light-emitting devices, characterized by comprising at least one thienyl-S,S-dioxide unit.

2. A luminescent organic material as claimed in Claim 1, characterized by comprising at least one thiophene ring in the α position of the ring of said thienyl-S,S-dioxide.

3. A luminescent organic material as claimed in Claim 2, characterized by having at least one alkyl or aryl substituent in the β position of the ring of said thienyl-S,S-dioxide.

4. A luminescent organic material as claimed in Claim 3, characterized in that said alkyl substituents are of such a form as to prevent π-π stacking and the formation of planar or partly planar structures.

5. A luminescent organic material for light-emitting devices, characterized by comprising at least one substance selected from the group consisting of : 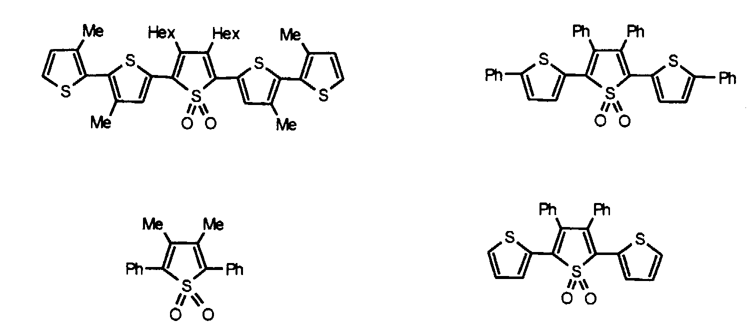 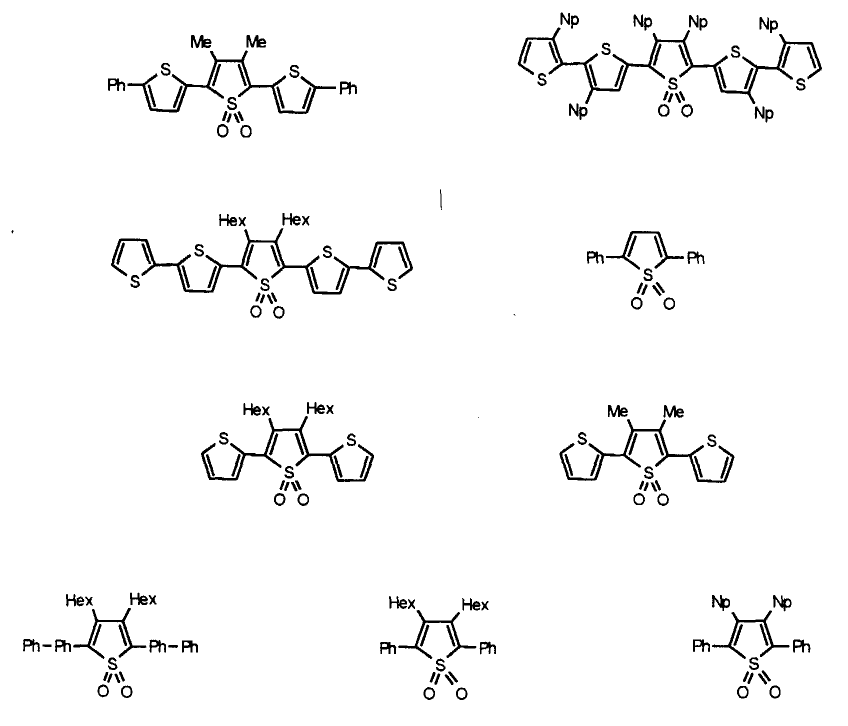 wherein Me = methyl; Hex = n-hexyl; Np = neo-pentyl; Ph = phenyl; Ph-Ph = p-biphenyl

6. Use of a luminescent material as claimed in Claims 1 to 5 in contacts.

7. Use of a luminescent material as claimed in Claims 1 to 5 in organic LEDs.

8. A light-emitting diode comprising a luminescent material, characterized in that said luminescent material comprises at least a thienyl-S,S-dioxide.
